# EUROPÄISCHE PATENTSCHRIFT

(11) **EP 3 862 599 B1**
(45) Veröffentlichungstag und Bekanntmachung des Hinweises auf die Patenterteilung: **03.05.2023**
(21) Anmeldenummer: 21153672.7
(22) Anmeldetag: 27.01.2021
(51) Int. Cl.: F16J 15/3236, F16J 15/02

(54) **LAMELLENDICHTRING MIT X-FÖRMIGER QUERSCHNITTSGEOMETRIE**
LAMELLAR SEALING RING WITH X-SHAPED CROSS-SECTIONAL GEOMETRY
BAGUE D'ÉTANCHÉITÉ À LAMELLES À GÉOMÉTRIE DE SECTION TRANSVERSALE EN FORME DE X

(30) Priorität: 07.02.2020 DE 102020201491
(43) Veröffentlichungstag der Anmeldung: 11.08.2021
(73) Patentinhaber: ContiTech Techno-Chemie GmbH, 61184 Karben (DE)
(72) Erfinder: Kuhlhoff, Florian, 30419 Hannover (DE); Flach, Axel, 30419 Hannover (DE)
(74) Vertreter: Continental Corporation

(56) Entgegenhaltungen:
- EP-B1- 3 224 507
- WO-A1-02/14719
- AT-U1- 14 083
- JP-U- H 064 468

## Beschreibung

Die Erfindung betrifft einen aus einem Elastomermaterial hergestellten Lamellendichtring mit einer X-förmigen Querschnittsgeometrie, welcher einen ringförmigen Mittelabschnitt aufweist, von dem radial außen in entgegengesetzte axiale Richtungen ein erster langer Schenkel sowie ein erster kurzer Schenkel abstehen, und von dem radial innen ebenfalls in entgegengesetzte axiale Richtungen weisend ein zweiter langer Schenkel sowie ein zweiter kurzer Schenkel abstehen.

Derartige Lamellendichtringe werden beispielsweise zum Abdichten einer rotierenden Welle zu einem stationären Gehäuse, zum Abdichten von fluidgefüllten Räumen oder zur Abdichtung von Rohrverbindungen genutzt. Wenngleich die Herstellkosten eines Lamellendichtrings im Vergleich zu einem O-Ring höher sind, so hat ein Lamellendichtring demgegenüber den Vorteil, dass beim Zusammenfügen von zwei Bauteilen unter Zwischenlage eines Lamellendichtrings geringere Fügekräfte aufzuwenden sind. Lamellendichtringe bestehen aus einem elastomeren Material, wie beispielsweise Polytetrafluorethylen (PTFE), und weisen in der Regel einen Mittelabschnitt auf, von dem wenigstens eine elastomere Lamelle oder Dichtlippe absteht. Diese Lamelle liegt nach dem Einbau des Lamellendichtrings in eine beispielsweise maschinenbauliche Konstruktion unter elastischer Verformung derselben beispielsweise an einem drehbaren Teil an. Die dazu notwendige Anpresskraft wird entweder durch die elastische Rückstellkraft des Elastomermaterials der Lamelle, durch die Kraft eines zusätzlich angeordneten O-Rings oder durch den Druck des abzudichtenden Fluids erzeugt.

Es sind Lamellendichtringe mit sehr unterschiedlichen Querschnittsgeometrien bekannt, beispielsweise solche mit einer Y-förmigen oder X-förmigen Geometrie.

Insbesondere Lamellendichtringe mit einer konventionellen X-förmigen Querschnittsgeometrie, wie sie beispielsweise aus der DE 66 09 575 U und der US 2,165,052 A bekannt sind, haben gleichlange X-Schenkel. Derartige Lamellendichtringe haben den Nachteil, dass sie beim Fügen der gegeneinander abzudichtenden Bauteile unter Zwischenlage des Lamellendichtrings nur geringe Toleranzen ausgleichen können und zudem eine sehr gute Schmierung für den Fügevorgang erfordern. Ohne eine solche Schmierung würden sich die X-Schenkel des Lamellendichtrings beim Fügen der Bauteile durch die dann entstehende große Haftreibung nachteilig verdrillen. Das Aufbringen von Schmiermittel auf den Lamellendichtring oder das Einbringen eines Schmierstoffes in das Elastomermaterial des Lamellendichtrings bei dessen Herstellung sind jedoch aufwendig und teuer.

Aus der EP 3224507 B1 ist eine spiegelsymmetrische Dichtung für einen beweglichen Kolben einer Hochdruckpumpe bekannt. Aus den Patentdokumenten AT 12 491 U1, AT 14 083 U1, DE 200 18 630 U1, DE 297 12 416 U1, DE 297 20 908 U1 und US 2,809,853 A sind auch Lamellendichtringe mit X-förmiger Querschnittsgeometrie bekannt, deren X-Schenkel unterschiedlich lang sind.

Der Erfindung lag die Aufgabe zugrunde einen kostengünstig herstellbaren Lamellendichtring vorzustellen, der einerseits das Zusammenfügen von gegeneinander abzudichtenden Bauteilen mit einer vergleichsweise geringer Haftreibung sowie ein radiales Abspreizen seiner langen Schenkel mit hoher Dichtungswirkung ermöglicht, wenn auf diese ein unter Überdruck stehendes Fluid einwirkt.

Die Lösung der gestellten Aufgabe wurde mit einem Lamellendichtring erreicht, welcher die Merkmale des Anspruchs 1 aufweist. Vorteilhafte Weiterbildungen dieses Lamellendichtrings sind in den abhängigen Ansprüchen definiert.

Der Erfindung lag die Erkenntnis zugrunde, dass durch eine besondere Ausbildung und Ausrichtung unterschiedlich langer Schenkel eines Lamellendichtrings mit X-förmiger Querschnittsgeometrie dessen Montage- und Dichtungseigenschaften verbesserbar sind.

Die Erfindung betrifft demnach einen aus einem Elastomermaterial hergestellten Lamellendichtring mit einer X-förmigen Querschnittsgeometrie, welcher einen ringförmigen Mittelabschnitt aufweist, von dem radial außen in entgegengesetzte axiale Richtungen ein erster langer Schenkel sowie ein erster kurzer Schenkel abstehen, und von dem radial innen ebenfalls in entgegengesetzte axiale Richtungen weisend ein zweiter langer Schenkel sowie ein zweiter kurzer Schenkel abstehen.

Zur Lösung der gestellten Aufgabe ist bei diesem Lamellendichtring vorgesehen, dass die Länge des radial inneren kurzen Schenkels geringer ist als die Länge des radial äußeren kurzen Schenkels, dass die Länge des radial inneren langen Schenkels geringer ist als die Länge des radial äußeren langen Schenkels, dass sich der radial äußere lange Schenkel weiter nach radial außen erstreckt als der radial äußere kurze Schenkel, und dass sich der radial innere lange Schenkel weiter nach radial innen erstreckt als der radial innere kurze Schenkel.

Dadurch, dass die radial innen angeordneten Schenkel des Lamellendichtrings eine vergleichsweise geringe Länge aufweisen, ist für das Aufschieben des Lamellendichtrings auf ein zylindrisches Bauteil, wie eine Welle, oder auf einen ringförmigen Dichtringsitz wegen einer nur geringen Haftreibung kein großer Kraftaufwand notwendig.

Dadurch, dass der radial äußere lange Schenkel des Lamellendichtrings mit seinem freien Ende etwas nach radial außen und der radial innere lange Schenkel mit seinem freien Ende etwas nach radial innen weist, ist durch dieses Geometriemerkmal des Lamellendichtrings festgelegt, dass sich diese beiden langen Schenkel an der einen Axialseite des Lamellendichtrings bei der Einwirkung eines Fluiddrucks zwischen denselben radial voneinander weg abspreizen und mit einer vergleichsweise großer Anpresskraft abdichtend zur Anlage an den jeweils zugeordneten Bauteilen gelangen. Andere Vorteile dieses Lamellendichtrings werden später im Zusammenhang mit der Schilderung von Ausführungsbeispielen genannt. Gemäß einer vorteilhaften Weiterbildung des die Merkmale der Erfindung aufweisenden Lamellendichtrings kann vorgesehen sein, dass die Differenz der Längen der beiden kurzen Schenkel des Lamellendichtrings größer ist als die Differenz der Längen der beiden langen Schenkel. Ein solcher Lamellendichtring ist beispielsweise gut für die Abdichtung von zwei Bauteilen zueinander gegen den Durchtritt von Kühlwasser mit Drücken von bis zu 3,5 × 10⁵ Pa geeignet.

Alternativ dazu kann vorgesehen sein, dass die Differenz der Längen der beiden kurzen Schenkel des Lamellendichtrings geringer ist als die Differenz der Längen der beiden langen Schenkel. Dieser Lamellendichtring ist beispielsweise gut für die Abdichtung von Fluiden mit Drücken von bis zu 5,1 × 10⁵ Pa geeignet, beispielsweise für Motoröl, Diesel- und Biodieselkraftstoffe, sowie für gasförmige Fluide mit Temperaturen von bis zu 230° Celsius.

Ein weiteres geometrisches Merkmal eines erfindungsgemäßen Lamellendichtrings besteht darin, dass die radiale Außenseite seines radial äußeren kurzen Schenkels und die radiale Innenseite seines radial inneren kurzen Schenkels parallel zur geometrischen Längsmittenachse des Lamellendichtrings ausgerichtet sind. Hierdurch ist das Zusammenfügen von zwei axial zu verbindenden Bauteilen unter Zwischenlage des Lamellendichtrings mit einer geringen Haftreibung möglich, da die beiden kurzen Schenkel beim Fügen der Bauteile nicht versuchen, sich aus ihrer Parallelausrichtung aufstellen.

Schließlich kann vorgesehen sein, dass der Mittelabschnitt des Lamellendichtrings an seinen beiden axialen Seiten zwischen den paarweise angeordneten Schenkeln jeweils einen Übergangsbereich aufweist, und dass die beiden Übergangsbereiche sowie die freien Enden aller Schenkel abgerundet ausgebildet sind. Hierdurch kann der erfindungsgemäße Lamellendichtring bei seiner Herstellung in einem Spritzgussverfahren besonders einfach aus einer Spritzgussform entformt werden, ohne dass Materialreste in der Spritzgussform zurückbleiben. Die dennoch gegebenenfalls an einem solchen Lamellendichtring anhaftenden Überspritzungsreste können nach Herunterkühlen des Lamellendichtrings auf eine Temperatur von beispielsweise -173° Celsius von den abgerundeten Bereichen des Lamellendichtrings mittels aufgestrahlter Kunststoffkugeln leichter schadlos entfernt werden als von konventionellen, kantigen Bereichen desselben.

Bei dem hier vorgestellten Lamellendichtring ist zusammenfassend die Idee konstruktiv verwirklicht worden, dass alle Schenkel beziehungsweise Dichtlippen unterschiedlich lang sind und die beiden kürzesten Schenkel weitgehend parallel zur geometrischen Längsachse des Lamellendichtrings von der einen axialen Seite desselben abstehen, während die beiden längsten Schenkel von der anderen axialen Seite abstehen und dabei unter jeweils einem Anstellwinkel in unterschiedliche kombiniert axial-radiale Richtungen weisen. Dieser konstruktive Aufbau des Lamellendichtrings ermöglicht wegen der beiden kurzen Schenkel einerseits ein für den Lamellendichtring verdrillungsfreies Fügen von zwei gegeneinander abzudichtenden Bauteilen unter geringer Haftreibung, und andererseits ein sehr gutes Abdichtverhalten des Lamellendichtrings, wenn radial zwischen den beiden längeren Schenkeln ein Fluid mit Überdruck wirkt und dadurch diese Schenkel in entgegengesetzte radiale Richtungen an die abzudichtenden Bauteile gepresst werden.

Die beigefügte Zeichnung zeigt in ihren Figuren unterschiedliche Ausführungsformen von erfindungsgemäß ausgebildeten Lamellendichtringen. Im Einzelnen zeigt
Fig. 1 eine vollständige schematische Querschnittansicht eines erfindungsgemäßen Lamellendichtrings,
Fig. 2 einen vergrößerten hälftigen Querschnitt durch den Lamellendichtring gemäß

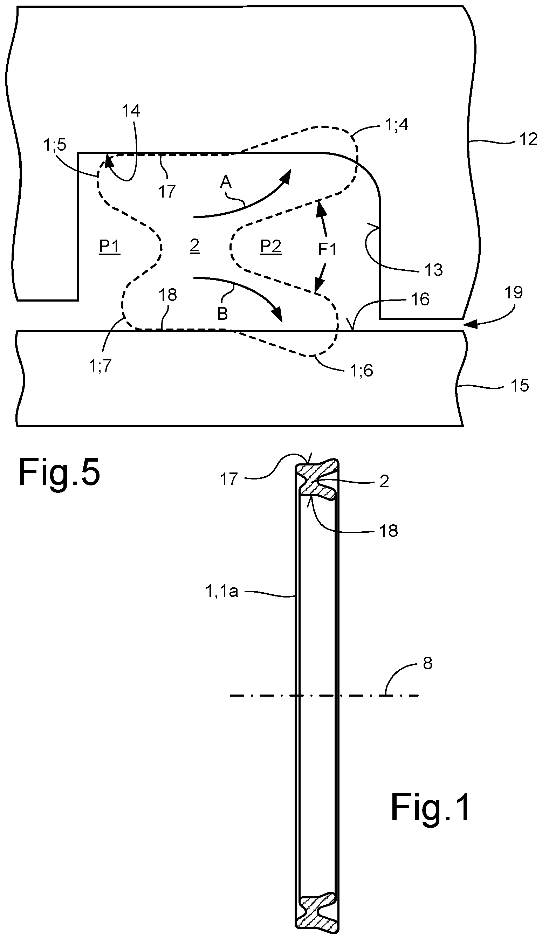

Fig. 1, jedoch mit Längenangaben zu dessen vier Dichtringschenkeln;

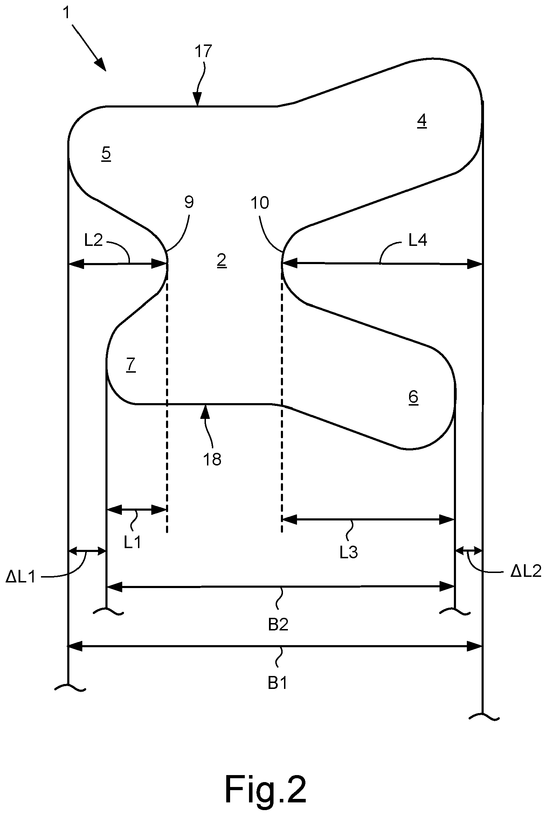

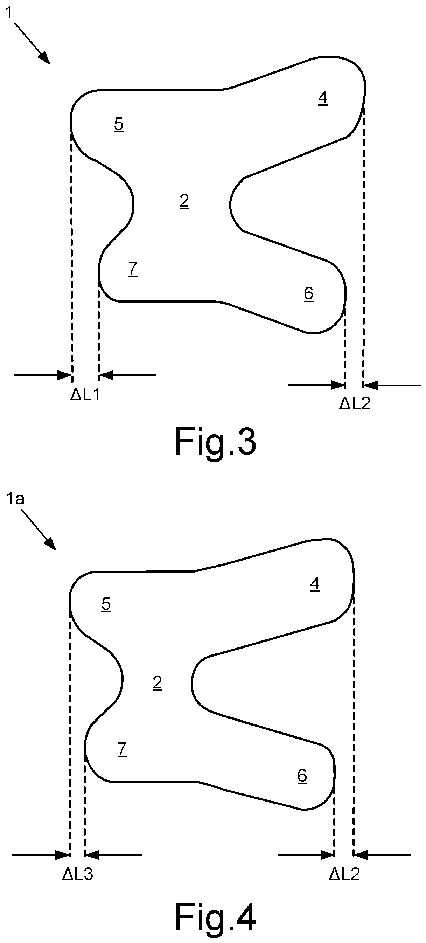

Fig. 3 eine Querschnittdarstellung des Lamellendichtrings gemäß Fig. 2, jedoch mit einer Darstellung von Längendifferenzen der Schenkel desselben gemäß einer ersten Ausführungsform,
Fig. 4 eine Querschnittdarstellung wie in Fig. 3 gemäß einer zweiten Ausführungsform, und
Fig. 5 eine teilweise Querschnittdarstellung eines erfindungsgemäßen Lamellendichtrings in einer Einbausituation zwischen zwei gegeneinander abzudichtenden Bauteilen.

Wie die Figuren zeigen, hat der Lamellendichtring 1, 1a eine X-förmige Querschnittsgeometrie mit einem ringförmigen Mittelabschnitt 2 und vier davon im Wesentlichen in Längsaxialrichtung, also zumindest weitgehend parallel zur geometrischen Längsmittenachse 8, ausgerichtete Schenkel 4, 5, 6, 7. Der Lamellendichtring 1, 1a besteht aus einem Elastomer, beispielsweise aus Silikon oder Polytetrafluorethylen (PTFE). Von den vier Schenkeln 4, 5, 6, 7 sind zwei vergleichsweise kurze Schenkel 5, 7 an einer ersten axialen Seite des Lamellendichtrings 1, 1a angeordnet, während die beiden anderen Schenkel 4, 6 im Vergleich zu den beiden kurzen Schenkeln 5, 7 länger ausgebildet sind und an der anderen axialen Seite des Lamellendichtrings 1, 1a von dessen Mittelabschnitt 2 abstehen. Die vier Schenkel 4, 5, 6, 7 haben jeweils eine andere Länge.

Die nachfolgend genannten Längen L1, L2, L3, L4 der vier Schenkel 4, 5, 6, 7 des Lamellendichtrings 1, 1a sind zwischen dem jeweiligen axialen freien Ende der Schenkel 4, 5, 6, 7 und der jeweils axial engsten Stelle des Mittelabschnitts 2 des Lamellendichtrings 1, 1a gemessen, welche an den beiden Axialseiten des Lamellendichtrings 1, 1a radial zwischen jeweils zwei Schenkeln 4, 6; 5, 7 ausgebildet sind. Diese beiden Übergangsbereiche 9, 10 am Mittelabschnitt 2 des Lamellendichtrings 1, 1a sind vorteilhaft abgerundet ausgebildet, wodurch bei der Herstellung des Lamellendichtrings 1, 1a insbesondere dessen Ausformen aus einer Spritzgießform erleichtert ist.

Wie vor allem Fig. 2 zeigt, ist gemäß der Erfindung ist vorgesehen, dass die Länge L1 des radial inneren kurzen Schenkels 7 geringer ist als die Länge L2 des radial äußeren kurzen Schenkels 5. Weiter ist die Länge L3 des radial inneren langen Schenkels 6 geringer ist als die Länge L4 des radial äußeren langen Schenkels 4. Zudem ist vorgesehen, dass sich der radial äußere lange Schenkel 4 weiter nach radial außen erstreckt als der radial äußere kurze Schenkel 5, und dass sich der radial innere lange Schenkel 6 weiter nach radial innen erstreckt als der radial innere kurze Schenkel 5. Hierdurch ist eine sehr vorteilhafte X-förmige Querschnittsgeometrie geschaffen, bei welcher die axiale Breite B1 des Lamellendichtrings 1, 1a radial außen größer ist als seine axiale Breite B2 radial innen. Zudem sind die Schenkel 5, 7 an der einen Axialseite kürzer als die Schenkel 4, 6 an der anderen Axialseite, und die beiden Schenkel 4, 6 auf der einen Axialseite des Lamellendichtrings 1, 1a erstrecken sich unter einem vergleichsweise geringen Anstellwinkel nach radial innen beziehungsweise nach radial außen. Als Anstellwinkel der beiden langen Schenkel 4, 6 zur Längsmittenachse 8 werden jeweils 10° bis 20°, einschließlich der Bereichsgrenzen, als besonders vorteilhaft beurteilt.

Die Figuren 3 und 4 zeigen, dass die Schenkel 4, 5, 6, 7 des Lamellendichtrings 1, 1a unter Beibehaltung der grundsätzlichen, oben beschriebenen Merkmale zueinander unterschiedliche Längendifferenzen aufweisen können. So ist bei dem in der Fig. 3 dargestellten ersten Ausführungsbeispiel eines Lamellendichtrings 1a vorgesehen, dass die Differenz ΔL1 der Längen L1, L2 der beiden kurzen Schenkel 5, 7 größer ist als die Differenz ΔL2 der Längen L3, L4 der beiden langen Schenkel 4, 6. So kann beispielsweise vorgesehen sein, dass die Differenz ΔL1 der Längen L1, L2 der beiden kurzen Schenkel 5, 7 einen Wert von ΔL1 = 0,4 mm aufweist, während die Differenz ΔL2 der Längen L3, L4 der beiden langen Schenkel 4, 6 den Wert ΔL2 = 0,3 mm hat. Ein solcher Lamellendichtring 1 ist besonders gut für die Abdichtung von zwei Bauteilen zueinander gegen den Durchtritt von Kühlwasser mit Drücken von bis zu 3,5 × 10⁵ Pa geeignet.

Bei dem in Fig. 4 dargestellten Lamellendichtring 1a gemäß einem zweiten Ausführungsbeispiel ist vorgesehen, dass die Differenz ΔL3 der Längen L1, L2 der beiden kurzen Schenkel 5, 7 geringer ist als die Differenz ΔL4 der Längen L3, L4 der beiden langen Schenkel 4, 6 zueinander. Bei diesem Beispiel bedeutet es, dass die Differenz ΔL3 der Längen L1, L2 der beiden kurzen Schenkel 5, 7 einen Wert von ΔL1 = 0,2 mm aufweist, während die Differenz ΔL2 der Längen L3, L4 der beiden langen Schenkel 4, 6 den Wert ΔL2 = 0,3 mm hat. Dieser Lamellendichtring 1a ist beispielsweise gut für die Abdichtung von Fluiden mit Drücken von bis zu 5,1 × 10⁵ Pa geeignet, etwa für Motoröl, Diesel- und Biodieselkraftstoffe, sowie für gasförmige Fluide mit Temperaturen von bis zu 230° Celsius.

Die Figuren 2 und 5 zeigen eine weitere vorteilhafte Ausgestaltung eines die Merkmale der Erfindung aufweisenden Lamellendichtrings 1, 1a, gemäß welcher die radiale Außenseite 17 des radial äußeren kurzen Schenkels 5 und die radiale Innenseite 18 des radial inneren kurzen Schenkels 7 parallel zur geometrischen Längsmittenachse 8 des Lamellendichtrings 1, 1a ausgerichtet sind. Hierdurch ist das Zusammenfügen von zwei zu verbindenden Bauteilen 12, 15 unter Zwischenlage des Lamellendichtrings 1, 1a mit einer geringen Haftreibung möglich, da die beiden kurzen Schenkel 5, 7 beim Fügen der Bauteile nicht versuchen, sich aus ihrer Parallelausrichtung aufstellen.

Durch die Anstellung der beiden langen Schenkel 4, 6 unter jeweils unterschiedlichen positiven und negativen Anstellwinkel zur Längsmittenachse 8 wird erreicht, dass sich die beiden langen Schenkel 4, 6 bei der Einwirkung eines Fluidüberdrucks P2 auf dieselben radial voneinander weg spreizen und mit einer vergleichsweise großer Anpresskraft an zugeordnete Bauteilen angepresst werden. In Fig. 5 sind hierzu zwei zusammenzufügende Bauteile 12, 15 dargestellt, welche mittels eines die Merkmale der Erfindung aufweisenden Lamellendichtrings 1 gegeneinander abgedichtet werden. Mit Hilfe des Lamellendichtrings 1 soll der Durchtritt eines Fluids durch einen zwischen den beiden Bauteilen 12, 15 ausgebildeten Spalts 19 verhindert werden. Hierzu ist der Lamellendichtring 1 in eine Ringnut 13 eingesetzt, welche an dem ersten Bauteil 12 ausgebildet ist. Auf der Seite der beiden kürzeren Schenkel 5, 7 des Lamellendichtrings 1 liegt in der Ringnut 13 ein erster Fluiddruck P1 an, während auf der anderen axial Seite des Lamellendichtrings 1 der zweite Fluiddruck P2 auf die vergleichsweise längeren Schenkel 4, 6 wirkt. Hierbei ist der erste Fluiddruck P1 geringer als der zweite Fluiddruck P2.

Der Lamellendichtring 1 sitzt mit der radial äußeren, planen radiale Außenseite 17 seines radial äußeren kurzen Schenkels 5 am Boden 14 der Ringnut 13 flächenbündig an. Außerdem liegt der radial innere kurze Schenkel 7 mit seiner planen Innenseite 18 an einer Dichtfläche 16 des zweiten Bauteils 15 an, wodurch insgesamt eine erste Dichtungswirkung erzielt ist.

Wie bereits geschildert wurde, ist bei diesem Lamellendichtring 1 vorgesehen, dass das radial äußere Ende des radial äußeren langen Schenkels 4 oberhalb des radial äußeren Endes des radial äußeren kurzen Schenkels 5 angeordnet ist. Zudem ist vorgesehen, dass das radial innere Ende des radial inneren langen Schenkels 6 unterhalb des radial inneren Endes des radial inneren kurzen Schenkels 7 angeordnet ist. Hierdurch ist unabhängig von der gewählten Dicke der jeweils beiden kürzeren Schenkel 6, 7 dafür gesorgt, dass die beiden langen Schenkel 4, 6, also diejenigen Schenkel 4, 6, deren freie Enden in die gleiche axiale Richtung sowie unter geringem Anstellwinkel in zueinander entgegengesetzte radiale Richtungen weisen, auch ohne Einwirkung eines Fluiddrucks bereits mit einer größeren Anpresskraft an den zugeordneten Bauteilen 12, 15 abdichtend anliegen, als die beiden kürzeren Schenkel 5, 7 an der gegenüberliegenden anderen Seite des Lamellendichtrings 1.

Wie Fig. 5 durch den mit gestrichelter Line dargestellten Lamellendichtring 1 verdeutlicht, wirkt dann eine zusätzliche Anpresskraft F1 auf den längeren radial inneren Schenkel 6 und längeren radial äußeren Schenkel 4, wenn in dem Raum zwischen diesen der erwähnte Überdruck P2 des Fluids wirkt. Die so fluidisch erzeugte Anpresskraft F1 bewirkt gemäß dem Pfeil A ein geringes, radial nach außen gerichtetes Ausschwenken und weiteres Anpressen des radial äußeren langen Schenkels 4 sowie gemäß dem Pfeil B ein geringes, radial nach innen gerichtetes Einschwenken und weiteres Anpressen des radial inneren langen Schenkels 6. Dies ist in Fig. 5 durch eine stark überhöhte Darstellung der radialen Positionen der beiden längeren Schenkel 4, 6 angedeutet. Demnach werden diese Schenkel 4, 6 stark abdichtend an den Nutboden 14 des ersten Bauteils 12 beziehungsweise an die Dichtfläche 16 des zweiten Bauteils 15 gedrückt.

### Bezugszeichenliste

- 1: Lamellendichtring (erste Ausführungsform)
- 1a: Lamellendichtring (zweite Ausführungsform)
- 2: Ringförmiger Mittelabschnitt des Lamellendichtrings
- 4: Radial äußerer langer Schenkel
- 5: Radial äußerer kurzer Schenkel
- 6: Radial innerer langer Schenkel
- 7: Radial innerer kurzer Schenkel
- 8: Geometrische Längsmittenachse des Lamellendichtrings
- 9: Erster Übergangsbereich am Mittelabschnitt
- 10: Zweiter Übergangsbereich am Mittelabschnitt
- 12: Erstes Bauteil
- 13: Ringnut im ersten Bauteil
- 14: Nutboden
- 15: Zweites Bauteil
- 16: Dichtfläche am zweiten Bauteil
- 17: Radiale Außenseite des radial äußeren kurzen Schenkels 5
- 18: Radiale Innenseite des radial inneren kurzen Schenkels 7
- 19: Spalt zwischen den Bauteilen 12, 15
- A: Schwenkrichtung des Schenkels 4
- B: Schwenkrichtung des Schenkels 6
- F1: Kraft auf die langen Schenkel 4, 6
- L1: Länge des radial inneren kurzen Schenkels
- L2: Länge des radial äußeren kurzen Schenkels
- L3: Länge des radial inneren langen Schenkels
- L4: Länge des radial äußeren langen Schenkels
- P1: Druck in der Nut auf der Seite der langen Schenkel
- P2: Druck in der Nut auf der Seite der kurzen Schenkel

## Patentansprüche

1. Lamellendichtring (1, 1a) mit einer X-förmigen Querschnittsgeometrie, wobei der Lamellendichtring aus einem Elastomermaterial besteht und einen ringförmigen Mittelabschnitt (2) aufweist, von dem radial außen in entgegengesetzte axiale Richtungen ein erster langer Schenkel (4) sowie ein erster kurzer Schenkel (5) abstehen, und von dem radial innen ebenfalls in entgegengesetzte axiale Richtungen weisend ein zweiter langer Schenkel (6) sowie ein zweiter kurzer Schenkel (7) abstehen, wobei die axiale Länge (L3) des radial inneren langen Schenkels (6) geringer ist als die axiale Länge (L4) des radial äußeren langen Schenkels (4), dass sich der radial äußere lange Schenkel (4) weiter nach radial außen erstreckt als der radial äußere kurze Schenkel (5), und dass sich der radial innere lange Schenkel (6) weiter nach radial innen erstreckt als der radial innere kurze Schenkel (5), **dadurch gekennzeichnet, dass** die axiale Länge (L1) des radial inneren kurzen Schenkels (7) geringer ist als die axiale Länge (L2) des radial äußeren kurzen Schenkels (5).

2. Lamellendichtring nach Anspruch 1, **dadurch gekennzeichnet, dass** die Differenz (ΔL1) der axialen Längen (L1, L2) der beiden kurzen Schenkel (5, 7) größer ist als die Differenz (ΔL2) der axialen Längen (L3, L4) der beiden langen Schenkel (4, 6) zueinander.

3. Lamellendichtring nach Anspruch 1, **dadurch gekennzeichnet, dass** die Differenz (ΔL3) der axialen Längen (L1, L2) der beiden kurzen Schenkel (5, 7) geringer ist als die Differenz (ΔL4) der axialen Längen (L3, L4) der beiden langen Schenkel (4, 6) zueinander.

4. Lamellendichtring nach einem der Ansprüche 1 bis 3, **dadurch gekennzeichnet, dass** die radiale Außenseite (17) des radial äußeren kurzen Schenkels (5) und die radiale Innenseite (18) des radial inneren kurzen Schenkels (7) parallel zur geometrischen Längsmittenachse (8) des Lamellendichtrings (1, 1a) ausgerichtet sind.

5. Lamellendichtring nach einem der Ansprüche 1 bis 4, **dadurch gekennzeichnet, dass** der Mittelabschnitt (2) an seinen beiden axialen Seiten zwischen den paarweise angeordneten Schenkeln (4, 5, 6, 7) jeweils einen Übergangsbereich (9, 10) aufweist, und dass die beiden Übergangsbereiche (9, 10) sowie die freien Enden aller Schenkel (4, 5, 6, 7) abgerundet ausgebildet sind.

## Claims

1. Lamellar sealing ring (1, 1a) with an X-shaped cross-sectional geometry, wherein the lamellar sealing ring consists of an elastomer material and has an annular middle portion (2) from which a first long limb (4) and a first short limb (5) project radially outwards in opposite axial directions and from which a second long limb (6) and a second short limb (7) project radially inwards, likewise pointing in opposite axial directions, wherein the axial length (L3) of the radially inner long limb (6) is less than the axial length (L4) of the radially outer long limb (4), the radially outer long limb (4) extends further radially outwards than the radially outer short limb (5), and the radially inner long limb (6) extends further radially inwards than the radially inner short limb (5), **characterized in that** the axial length (L1) of the radially inner short limb (7) is less than the axial length (L2) of the radially outer short limb (5).

2. Lamellar sealing ring according to Claim 1, **characterized in that** the difference (ΔL1) between the axial lengths (L1, L2) of the two short limbs (5, 7) is greater than the difference (ΔL2) between the axial lengths (L3, L4) of the two long limbs (4, 6).

3. Lamellar sealing ring according to Claim 1, **characterized in that** the difference (ΔL3) between the axial lengths (L1, L2) of the two short limbs (5, 7) is less than the difference (ΔL4) between the axial lengths (L3, L4) of the two long limbs (4, 6).

4. Lamellar sealing ring according to one of Claims 1 to 3, **characterized in that** the radial outer side (17) of the radially outer short limb (5) and the radial inner side (18) of the radially inner short limb (7) are oriented parallel to the geometrical longitudinal central axis (8) of the lamellar sealing ring (1, 1a).

5. Lamellar sealing ring according to one of Claims 1 to 4, **characterized in that** the middle portion (2) has on its two axial sides between the limbs (4, 5, 6, 7), which are arranged in pairs, in each case one transition region (9, 10), and **in that** the two transition regions (9, 10) and the free ends of all the limbs (4, 5, 6, 7) are of rounded form.

## Revendications

1. Bague d'étanchéité à lamelles (1, 1a) à géométrie de section transversale en forme de X, dans laquelle la bague d'étanchéité à lamelles est composée d'un matériau élastomère et présente une partie centrale annulaire (2) à partir de laquelle une première branche longue (4) ainsi qu'une première branche courte (5) font saillie radialement à l'extérieur dans des directions axiales opposées et à partir de laquelle une deuxième branche longue (6) ainsi qu'une deuxième branche courte (7) font également saillie radialement à l'intérieur dans des directions axiales opposées, dans laquelle la longueur axiale (L3) de la branche longue radialement intérieure (6) est inférieure à la longueur axiale (L4) de la branche longue radialement extérieure (4), la branche longue radialement extérieure (4) s'étendant radialement vers l'extérieur plus loin que la branche courte radialement extérieure (5), et la branche longue radialement intérieure (6) s'étendant radialement vers l'intérieur plus loin que la branche courte radialement intérieure (5),
**caractérisée en ce que** la longueur axiale (L1) de la branche courte radialement intérieure (7) est inférieure à la longueur axiale (L2) de la branche courte radialement extérieure (5).

2. Bague d'étanchéité à lamelles selon la revendication 1, **caractérisée en ce que** la différence (ΔL1) des longueurs axiales (L1, L2) des deux branches courtes (5, 7) est supérieure à la différence (ΔL2) des longueurs axiales (L3, L4) des deux branches longues (4, 6) l'une par rapport à l'autre.

3. Bague d'étanchéité à lamelles selon la revendication 1, **caractérisée en ce que** la différence (ΔL3) des longueurs axiales (L1, L2) des deux branches courtes (5, 7) est inférieure à la différence (ΔL4) des longueurs axiales (L3, L4) des deux branches longues (4, 6) l'une par rapport à l'autre.

4. Bague d'étanchéité à lamelles selon l'une quelconque des revendications 1 à 3, **caractérisée en ce que** la face extérieure radiale (17) de la branche courte radialement extérieure (5) et la face intérieure radiale (18) de la branche courte radialement intérieure (7) sont orientées en parallèle à l'axe médian longitudinal géométrique (8) de la bague d'étanchéité à lamelles (1, 1a).

5. Bague d'étanchéité à lamelles selon l'une quelconque des revendications 1 à 4, **caractérisée en ce que** la partie centrale (2) présente sur ses deux faces axiales entre les branches (4, 5, 6, 7) disposées par paires respectivement une zone de transition (9, 10), et **en ce que** les deux zones de transition (9, 10) ainsi que les extrémités de toutes les branches (4, 5, 6, 7) sont réalisées de manière arrondie.
